# EUROPEAN PATENT APPLICATION

(11) **EP 0 576 065 A2**
(43) Date of publication of application: **29.12.1993**
(21) Application number: 93201681.9
(22) Date of filing: 11.06.1993
(51) Int. Cl.: G11B 23/00, G11B 23/087, G11B 15/62

(54) **Magnetic-tape cassette, tape-pressure member and tape-pressure felt for use in the magnetic-tape cassette, and method of manufacturing the tape-pressure felt**

(30) Priority: 19.06.1992 EP 92201790
(71) Applicant: Philips Electronics N.V., 5621 BA Eindhoven (NL)
(72) Inventor: Keppel, Andriaan Gerard, NL-5656 AA Eindhoven (NL)
(74) Representative: Cuppens, Hubertus Martinus Maria

(57) **Abstract**

The invention relates to a magnetic-tape cassette (1) comprising a housing which accommodates a magnetic tape (23) and which comprises a transverse wall (9) having a magnetic-head opening (17) for the passage of a magnetic head (41) of a magnetic-tape apparatus. A tape portion of the magnetic tape extends along the magnetic-head opening and during cooperation with a magnetic-tape apparatus it is pressed against a magnetic head (41) by a tape-pressure felt (53). In order to reduce the friction between the magnetic tape (23) and the tape-pressure felt (53) PTFE particles have been dispersed in the tape-pressure felt (53). The tape-pressure felt (53) preferably comprises synthetic fibres, for example polyamide fibres, and is provided with the PTFE particles by wetting with polytetrafluoroethylene dispersed in a chlorofluorocarbon.

## Description

The invention relates to a magnetic-tape cassette comprising a housing having two parallel main walls and a plurality of transverse walls, of which one transverse wall has a magnetic-head opening for the passage of a magnetic head of a magnetic-tape apparatus, which magnetic-tape cassette further comprises a magnetic tape having a coating side and a back, which magnetic tape is accommodated in the housing and has a tape portion extending along the magnetic-head opening, a reel on which the magnetic tape has been wound partly, and a tape-pressure member with a tape-pressure felt situated at the back of the magnetic tape in the proximity of the magnetic-head opening and having a side facing the magnetic tape. The invention further relates to a tape-pressure member comprising a blade spring having a central portion to which a tape-pressure felt is secured, and a tape-pressure felt for use in the magnetic-tape cassette, and a method of manufacturing the tape-pressure felt.

A tape-pressure member and a tape-pressure felt of the type defined in the opening paragraph and suitable for use in a magnetic-tape cassette of the type defined in the opening paragraph are known from US 4,337,493. During cooperation of a magnetic-tape cassette of the type defined in the opening paragraph with a magnetic-tape apparatus a magnetic head enters the housing *via* the magnetic-head opening and the magnetic head comes into contact with the coating side of the magnetic tape, the back of the tape being brought into contact with the tape-pressure felt. The known tape-pressure felt has a fibrous structure and serves to press the magnetic tape against the magnetic head and thereby provide proper head-tape contact. The requirements which are therefore imposed on a tape-pressure felt of a magnetic-tape cassette of the type defined in the opening paragraph are that a uniform pressure should be exerted on the magnetic tape over the entire contact area with the magnetic tape, that the friction between the tape-pressure felt and the magnetic tape should be low, and that the tape-pressure felt should be capable of absorbing dirt and dust. A disadvantage of the known tape-pressure felt is that as a result of the friction between the tape-pressure felt and the magnetic tape during cooperation of a magnetic-tape cassette with a magnetic-tape apparatus stick-slip effects are more likely to occur. These stick-slip effects signify that owing to the frictional force between the magnetic tape and the pressure felt the magnetic tape is retained briefly until the pulling force produced in the magnetic tape by the tape-drive means provided in the magnetic-tape apparatus has increased to such an extent that the magnetic tape is pulled loose. This process repeats itself so that the tape transport past the magnetic head is irregular, which may give rise to audible disturbances in the reproduction of sound. These stick-slip effects depend on the pressure exerted on the magnetic tape by the tape-pressure felt and on the coefficient of friction between the tape-pressure felt and the magnetic tape. In order to achieve a correct head-tape contact for a satisfactory signal transfer between the magnetic head and the magnetic tape the pressure should not decrease below a specific minimum value.

It is an object of the invention to provide a magnetic-tape cassette of the type defined in the opening paragraph, a tape-pressure member and a tape-pressure felt such that the friction between the tape-pressure felt and the magnetic tape during cooperation with a magnetic-tape apparatus is reduced and the pressure exerted on the magnetic tape by the tape-pressure felt is substantially uniform over the entire contact area without a degradation of the favourable dirt-absorbing qualities of the tape-pressure felt. To this end the magnetic-tape cassette, the tape-pressure member and the tape-pressure felt in accordance with the invention are characterised in that at least at the side facing the magnetic tape the tape-pressure felt has been provided with polytetrafluoroethylene. As a result of this, the contact between the magnetic tape and the fibres of the tape-pressure felt is established at least partly *via* the polytetrafluoroethylene particles. The coefficient of friction between polytetrafluoroethylene and the magnetic tape is smaller than that between the fibres of the tape-pressure felt and the magnetic tape, so that the friction between the tape-pressure felt and the magnetic tape is reduced. The fibrous structure of the tape-pressure felt is maintained, so that the favourable dirt-absorbing qualifies and the uniform pressure are maintained.

The use of polytetrafluoroethylene (PTFE) as a material for reducing the friction between parts moving over one another is kno*w per se*. In the known uses a film of polytetrafluoroethylene is applied to one of the surfaces which are in contact with one another. However, if such a film is applied to a felt this will eliminate the dirt-absorbing capacity of such a felt. As result, dirt may collect on the felt at the entry side of the magnetic tape, which may give rise to increased friction and a non-uniform pressure. US 4,796,135 describes a tape-pressure member having a pressure pad comprising a PTFE layer and IBM Technical Disclosure Bulletin, Vol. 19, No. 6, November 1976 describes a tape-pressure member comprising a foam block onto which a PTFE-impregnated glass-fibre mat has been glued. These two tape-pressure members reduce the coefficient of friction between the magnetic tape and the tape-pressure member in comparison with a tape-pressure member comprising a tape-pressure felt but the dirt-absorbing capacity is smaller and the pressure distribution over the contact area is less uniform than in the case that a tape-pressure felt is used. Moreover, the construction of the tape-pressure member is more intricate and more expensive than that of a tape-pressure member comprising a tape-pressure felt.

It has been found that if the tape-pressure felt comprises synthetic fibres, preferably polyamide fibres, the PTFE particles are taken up and retained more effectively by the felt, leading to improved characteristics.

The invention further relates to a method of manufacturing a tape-pressure felt in accordance with the invention. This method is characterised in that a tape-pressure felt is wetted with polytetrafluoroethylene dispersed in a chlorofluorocarbon. This enables the PTFE particles to be incorporated in the felt in an advantageous manner. Until now the best result is obtained if a tape-pressure felt is wetted with polytetrafluoroethylene dispersed in CCl₂FCClF₂.

It has been found that immersion of the tape-pressure felt in said dispersion and spraying the dispersion onto the tape-pressure felt are suitable wetting methods.

The invention will now be described in more detail, by way of example, with reference to the drawings. In the drawings:
Figure 1 is an exploded view of a magnetic-tape cassette in accordance with the invention,
Figure 2 is a sectional view of the magnetic-tape cassette near the magnetic-head opening during cooperation with a magnetic head, and
Figure 3 shows a tape-pressure member comprising a tape-pressure felt.

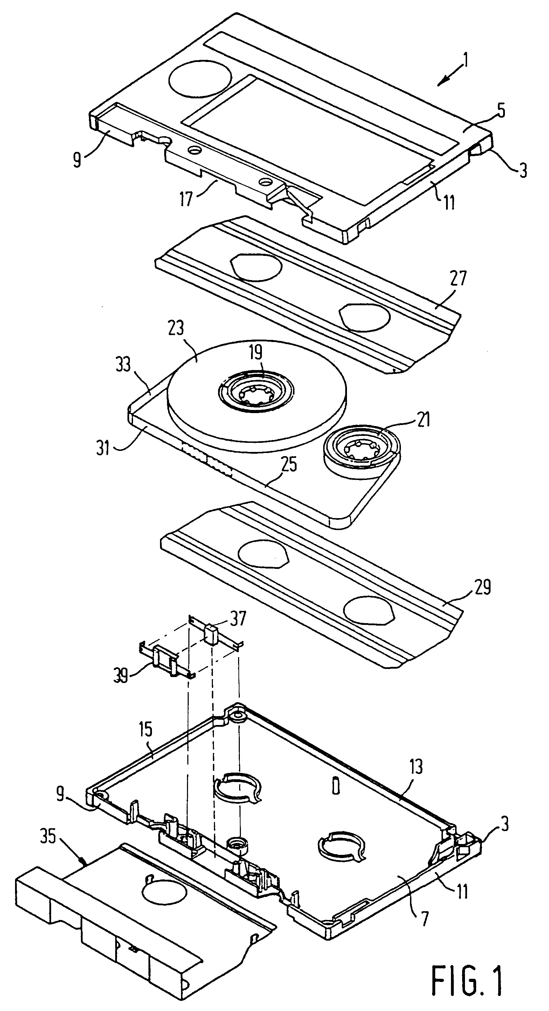

Figure 1 is an exploded view of a magnetic-tape cassette 1 in accordance with the invention. The magnetic-tape cassette 1 comprises a housing 3 having two parallel main walls 5, 7 and various transverse walls 9, 11, 13, 15. One of the transverse walls 9 has a magnetic-head opening 17 for the passage of a magnetic head of a magnetic-tape apparatus. The housing 3 accommodates two reels 19, 21 carrying a magnetic tape 23. A tape portion 25 of the magnetic tape extends along the magnetic-head opening 17 in the transverse wall 9. The reels 19, 21 carrying the magnetic tape 23 are interposed between two tape-guide foils 27, 29. The magnetic tape 23 has a coating side 31 where a magnetic coating is situated, and a back 33. The magnetic-tape cassette 1 further comprises a sliding cover 35, which is movable between a closed position, in which the sliding cover 35 covers the openings in the housing 3, and an open position, in which the sliding cover exposes the openings. The magnetic-tape cassette 1 further comprises a tape-pressure member 37 and a tape-guide member 39 for pressing the magnetic tape against a magnetic head and guiding the magnetic tape at the location of the magnetic head during cooperation with a magnetic-tape apparatus.

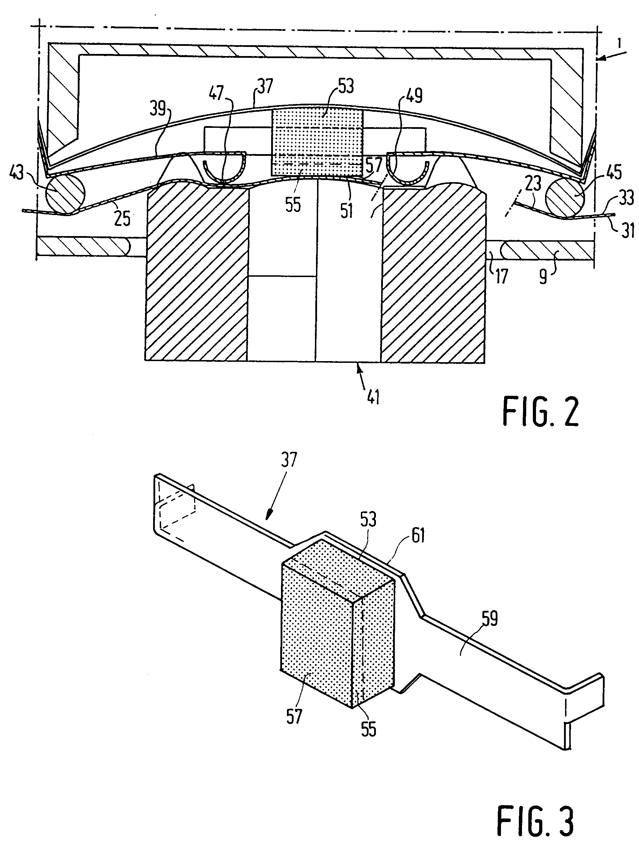

Figure 2 illustrates the cooperation between the magnetic-tape cassette 1 and a magnetic head 41 of a magnetic-tape apparatus at the location of the magnetic-head opening 17. The tape portion 25 of the magnetic tape 23 near the magnetic-head opening 17 is guided by tape-guide pins 43, 45 which form part of the housing and tape guides 47, 49 which form part of the tape-pressure member 39. The coating side of the magnetic tape 23 is in contact with a head face 51 of the magnetic head 41 and the back 33 is in contact with a tape-pressure felt 53 of the tape-pressure member 37. The tape-pressure felt 53 ensures that the magnetic tape 23 is pressed against the head face 51 of the magnetic head 41 with the coating side 31 in order to guarantee a correct signal transfer between the magnetic tape and the magnetic head. However, the friction between the magnetic tape 23 and the tape-pressure felt 53 should not be too high because otherwise stick-slip effects can occur between the magnetic tape and the tape-pressure felt.

For digital audio recording magnetic tapes are used which until now have been used only for video recording. The use of the known tape-pressure felts is then more likely to give rise to problems because of the different friction relationship between this new magnetic tape and a felt. Moreover, the requirements imposed on the head-tape contact in the case of digital audio recording are more stringent than in the case of the well-known analog audio recording technology, *inter ali*a in connection with smaller wavelengths of the signals, and stick-slip effects sooner lead to audible disturbances in the reproduction. In order to meet the more stringent requirements imposed on the head-tape contact in digital recording polytetrafluoroethylene particles (PTFE particles) are introduced into the tape-pressure felt in order to reduce the friction between the magnetic tape and the tape-pressure felt. To reduce the friction it is adequate if PTFE particles are present in a contact zone where the pressure felt 53 is in contact with the magnetic tape 23. The contact zone is formed by a portion 55 of the pressure felt 53 which adjoins a side 57 of the tape-pressure felt 53 which faces the magnetic tape 23.

Figure 3 shows the tape-pressure member 37 comprising a tape-pressure felt 53. The tape-pressure member 37 comprises a blade spring 59 having a central portion 61 to which the tape-pressure felt 53 is secured. The PTFE particles have been introduced into the portion 55 of the tape-pressure felt 53 adjacent the side 57 of the pressure felt 53 which is remote from the blade spring 59. The PTFE particles are situated on the fibres of the tape-pressure felt and should be situated at least on and near the front side 57 of the tape-pressure felt 53. Preferably, the tape-pressure felt 53 comprises fibres of a synthetic material, for example polyamide, because the globular PTFE particles are found to adhere well thereto. The fibre diameter is, for example, 20 µm and the particle diameter is, for example, 15 µm. The PTFE particles can be applied to the fibres of the tape-pressure felt by immersing the tape-pressure felt in a liquid with a PTFE dispersion or by spraying such a liquid onto the tape-pressure felt. A suitable liquid for this purpose is a chlorofluorocarbon (CFC), preferably trichlorofluoroethane CCl₂FCClF₂, but other CFCs may also be used, such as for example trichlorofluoromethane. Obviously, the area in which the PTFE particles are present need not be limited to said portion 55 but the particles may also be present in the entire tape-pressure felt 53. Moreover, it is possible to make the concentration of PTFE particles near the side 57 higher than elsewhere in the tape-pressure felt.

## Claims

1. A magnetic-tape cassette comprising a housing having two parallel main walls and a plurality of transverse walls, of which one transverse wall has a magnetic-head opening for the passage of a magnetic head of a magnetic-tape apparatus, which magnetic-tape cassette further comprises a magnetic tape having a coating side and a back, which magnetic tape is accommodated in the housing and has a tape portion extending along the magnetic-head opening, a reel on which the magnetic tape has been wound partly, and a tape-pressure member with a tape-pressure felt situated at the back of the magnetic tape in the proximity of the magnetic-head opening and having a side facing the magnetic tape, characterised in that at least at the side facing the magnetic tape the tape-pressure felt has been provided with polytetrafluoroethylene.

2. A magnetic-tape cassette as claimed in Claim 1, characterised in that at least in a portion of the tape-pressure felt adjoining the side facing the magnetic tape polytetrafluoroethylene particles have been introduced into the tape-pressure felt.

3. A magnetic-tape cassette as claimed in Claim 1 or 2, characterised in that the tape-pressure felt comprises a structure of synthetic fibres.

4. A magnetic-tape cassette as claimed in Claim 3, characterised in that the synthetic fibres are polyamide fibres.

5. A tape-pressure member suitable for use in a magnetic-tape cassette as claimed in Claim 1, 2, 3 or 4, comprising a blade spring having a central portion carrying a tape-pressure felt which has a side which is remote from the blade spring, characterised in that at least at the side which is remote from the blade spring the tape-pressure felt has been provided with polytetrafluoroethylene.

6. A tape-pressure member as claimed in Claim 5, characterised in that polytetrafluoroethylene particles have been introduced at least into a portion of the tape-pressure felt adjoining the side which is remote from the blade spring.

7. A tape-pressure felt suitable for use in a magnetic-tape cassette as claimed in Claim 1, 2, 3 or 4, characterised in that the tape-pressure felt has been provided with polytetrafluoroethylene at least at one side.

8. A tape-pressure felt as claimed in Claim 7, characterised in that polytetrafluoroethylene particles have been introduced into the tape-pressure felt at least in a portion adjoining a side.

9. A method of manufacturing a tape-pressure felt as claimed in Claim 7 or 8, characterised in that a tape-pressure felt is wetted with polytetrafluoroethylene dispersed in a chlorofluorocarbon.

10. A method as claimed in Claim 9, characterised in that the tape-pressure felt comprises synthetic fibres.

11. A method as claimed in Claim 9 or 10, characterised in that a tape-pressure felt is wetted with polytetrafluoroethylene dispersed in CCl₂FCClF₂.

12. A method as claimed in Claim 9, 10 or 11, characterised in that wetting is effected by immersing the tape-pressure felt in polytetrafluoroethylene dispersed in a chlorofluorocarbon.

13. A method as claimed in Claim 9, 10 or 11, characterised in that wetting is effected by spraying polytetrafluoroethylene dispersed in a chlorofluorocarbon onto the tape-pressure felt.
